Europäisches Patentamt

European Patent Office

Office européen des brevets

(11) Numéro de publication: **0 184 501**
A1

# (12) DEMANDE DE BREVET EUROPEEN

(21) Numéro de dépôt: 85402328.0

(22) Date de dépôt: 27.11.85

(51) Int. Cl.⁴: **A 47 J 27/04**
A 47 J 27/00

(30) Priorité: 28.11.84 FR 8418100

(43) Date de publication de la demande:
**11.06.86 Bulletin 86/24**

(84) Etats contractants désignés:
**BE DE NL**

(71) Demandeur: SEB S.A.

F-21260 Selongey(FR)

(72) Inventeur: Hennuy, Jean
En Machon Chervinges
F-69400 Villefranche/Saone(FR)

(72) Inventeur: Seguret, René
1 rue du Vieux Cep Limas
F-69400 Villefranche/Saone(FR)

(74) Mandataire: Bouju, André
Cabinet Bouju 38 avenue de la Grande Armée
F-75017 Paris(FR)

(54) **Appareil ménager pour le chauffage à la vapeur d'ingrédients.**

(57) L'appareil selon l'invention comporte un récipient (1) ayant une paroi latérale (2) et un fond (3) pour recevoir les ingrédients à chauffer, des moyens de production de vapeur (6) séparés du récipient (1) et des moyens de communication entre les moyens de production de vapeur et le récipient. Il est caractérisé en ce que les moyens de communication comprennent au moins une ouverture (8) équipée d'un dispositif anti-retour (9, 10) pour permettre un passage de vapeur vers le récipient et empêcher un retour de matière vers les moyens de production de vapeur.

FIG. 1

EP 0 184 501 A1

Croydon Printing Company Ltd.

La présente invention concerne un appareil ménager pour le chauffage à la vapeur d'ingrédients, notamment pour la préparation d'une boisson chocolatée.

On connaît bien entendu des appareils ménagers pour le chauffage à la vapeur d'ingrédients, notamment des aliments, ces appareils comportant généralement un récipient percé de trous dans lequel sont disposés les ingrédients à chauffer, le récipient étant lui-même introduit dans une enceinte fermée dans laquelle on produit de la vapeur, par exemple en chauffant de l'eau disposée dans le fond de l'enceinte. De tels appareils ne permettent pas de chauffer des ingrédients liquides ou devenant liquides à la suite du chauffage car ceux-ci s'écoulent alors par les trous.

On sait également préparer des boissons chaudes, notamment du chocolat au lait en disposant les ingrédients dans un récipient et en introduisant dans celui-ci une canne reliée à des moyens de production de vapeur. Ce procédé est notamment mis en oeuvre dans les débits de boissons qui sont généralement équipés de percolateurs comprenant une canne de prélèvement de vapeur. Ceux-ci supposent toutefois la disposition d'une source contrôlée de vapeur généralement incompatible avec un usage ménager.

Un but de la présente invention est de proposer un appareil ménager pour le chauffage à la vapeur d'ingrédients, qui puisse être utilisé avec des ingrédients liquides ou devenant liquides lors du chauffage par la vapeur et qui soit d'une structure suffisamment simple pour être utilisé à titre individuel ou dans le cadre d'un foyer.

En vue de la réalisation de ce but, on prévoit selon l'invention un appareil ménager pour le chauffage à la vapeur d'ingrédients comportant un récipient ayant une paroi latérale et un fond pour recevoir les ingrédients à chauffer, des moyens de production de vapeur séparés du récipient et des moyens de communication entre les moyens de production de vapeur et le récipient, caractérisé en ce que les moyens de communication comprennent au moins une ouverture équipée d'un dispositif anti-retour pour permettre un passage de vapeur vers le récipient et empêcher un retour de matière vers les moyens de production de vapeur.

Ainsi, la vapeur s'écoule vers le récipient et réchauffe les ingrédients qu'il contient mais ceux-ci sont maintenus emprisonnés dans le récipient.

Selon une version avantageuse de l'invention, les moyens de communication comprennent au moins une buse d'injection de vapeur. Ainsi, la vapeur est introduite sous pression dans le récipient et provoque non seulement un chauffage des ingrédients mais également un brassage de ceux-ci conduisant à un mélange homogène des ingrédients dans le récipient.

Selon une version préférée de l'invention, l'appareil comporte une chambre de vapeur en communication avec les moyens de production de vapeur et entourant la paroi latérale du récipient sur au moins une partie de sa hauteur. Ainsi, les ingrédients sont chauffés non seulement par le contact direct avec la vapeur mais également par un contact avec les parties chaudes de la paroi latérale.

Selon un autre aspect préféré de l'invention, l'appareil comporte au moins deux buses d'injection disposées dans la paroi latérale du récipient, ces buses étant inclinées selon une même direction par rapport à un plan normal à la paroi latérale du récipient au voisinage de chaque buse. Ainsi, les jets de vapeur s'échappant des buses provoquent un mouvement ordonné des ingrédients à l'intérieur du récipient et un chauffage homogène de ceux-ci.

Selon encore d'autres aspects avantageux de l'invention, le fond du récipient comporte une partie saillante en regard des buses d'injection et les buses sont disposées au voisinage du fond du récipient et sont inclinées vers celui-ci. Ainsi, la partie saillante canalise le mouvement des ingrédients dans le récipient et favorise encore leur brassage tandis que la disposition des buses et leur orientation évitent la formation d'un dépôt dans le fond du récipient.

D'autres caractéristiques et avantages de l'invention résulteront encore de la description ci-après d'un exemple non limitatif en référence aux dessins annexés dans lesquels :

- la figure 1 est une vue en coupe verticale d'un appareil selon l'invention,

- la figure 2 est une vue en coupe suivant le plan II-II de la figure 1,

- la figure 3 est une vue de dessus de la chaudière de l'appareil selon l'invention.

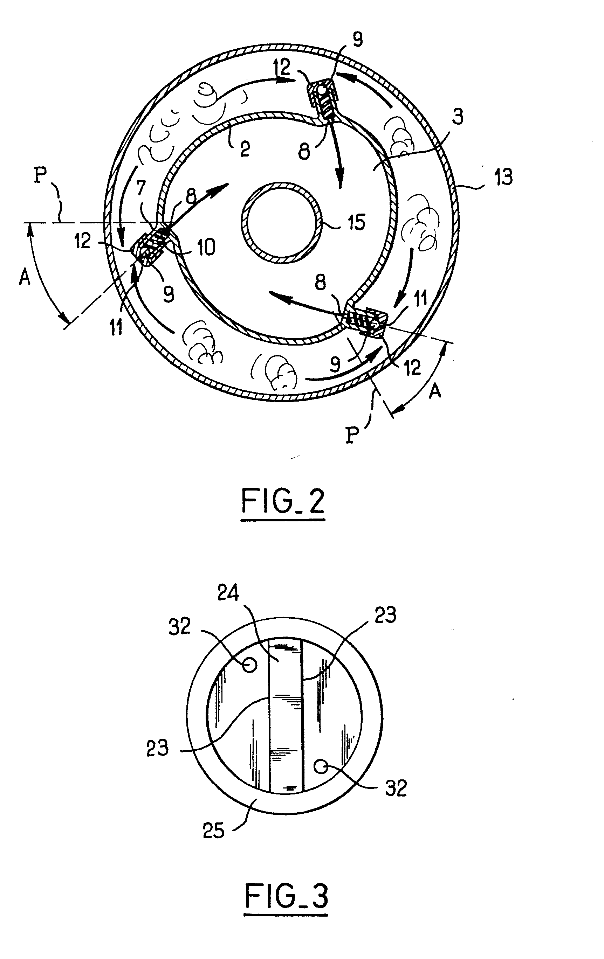

En référence aux figures, l'appareil comporte un récipient 1 résistant à la chaleur, réalisé par exemple en polycarbonate, ayant une paroi latérale 2 et un fond 3, et équipé d'un bec verseur 4 et d'un couvercle amovible 5. Le récipient 1 est destiné à recevoir les ingrédients à chauffer et est disposé au-dessus de moyens de production de vapeur séparés du récipient formé par une chaudière 6 dont la structure sera expliquée plus en détail ci-dessous. Des moyens de communication sont prévus entre les moyens de production de vapeur et le récipient. Dans le mode de réalisation représenté, les moyens de communication comprennent trois buses d'injection 7 régulièrement espacées autour de la paroi latérale 2 du récipient 1, comportant chacune une ouverture 8 du côté de la paroi 2 du récipient et équipées d'un dispositif anti-retour comportant une bille 9 normalement maintenue appliquée par un ressort 10 pour fermer une ouverture 11 réalisée dans un capuchon 12 fixé à la buse 7 du côté opposé à l'ouverture 8 (Fig. 2).

Le récipient 1 est relié à l'ouverture de la chaudière 6 par un élément de paroi 13 soudé de façon étanche à sa partie supérieure avec la paroi latérale 2 du récipient 1 et délimitant une chambre de vapeur 14 en commu- cation avec la chaudière 6 et entourant la partie inférieure de la paroi latérale 2 du récipient 1.

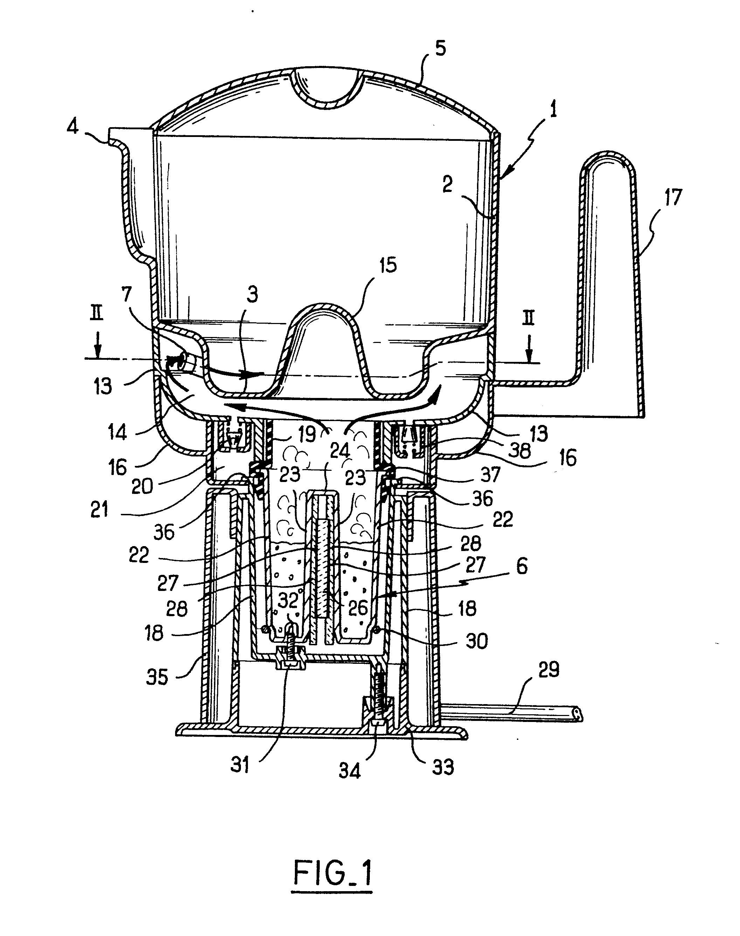

Les buses d'injection 7 sont disposées dans la partie inférieure de la paroi latérale 2 du récipient 1 et sont inclinées selon une direction formant un angle A voisin de 45° par rapport à un plan P normal à la paroi latérale 2 du récipient au voisinage de chaque buse (figure 2). Au regard des buses d'injection 7, le fond 3 du récipient comporte une partie saillante 15 en forme de dôme. Ainsi qu'on peut le voir sur la figure 1, les buses 7 sont disposées au voisinage du fond 3 du récipient et sont légèrement inclinées, de 9° dans l'exemple, vers celui-ci.

Un élément de paroi 16 est fixé à l'élément de paroi 13, par exemple en étant soudé à celui-ci, et forme un bague de verrouillage, par exemple du type à baïonnette, en coopérant avec des ergots 36 portés par un élément de paroi 18 solidaire de la chaudière 6. L'élément de paroi 16 et les ergots 36 réalisent ainsi des moyens de liaison démontables entre le récipient 1 et la chaudière 6. Le récipient 1 est donc monté de façon amovible sur les moyens de production de vapeur.

Selon la version avantageuse représentée, les moyens de liaison comportent un joint d'étanchéité 37 s'appuyant sur le rebord supérieur de la chaudière 6 et comportant une jupe 19 s'étendant à l'intérieur de la partie inférieure de l'élément de paroi 13.

Un clapet anti-retour 20 représenté de façon schématique sur la figure 1, est disposé dans l'élément de paroi 13 et assure une liaison directionnelle entre la chambre de vapeur 14 et un espace annulaire 21 en liaison avec l'air extérieur par des ouvertures (non représentées) dans l'élément de paroi 16, par exemple les lumières de passage des ergots 36.

L'élément de paroi 16 supporte une poignée 17 permettant de manipuler l'ensemble formé par le récipient 1, l'élément de paroi 13 et l'élément de paroi 16.

La chaudière 6 comprend, selon une version préférée, deux éléments de chaudière 22 en forme de demi-cylindres comportant chacun une partie de paroi plane 23, deux parties de paroi 23 étant réunies par une partie de paroi 24 formant un pont entre les parties de paroi 23.

A la partie supérieure de la chaudière, les éléments de chaudière se réunissent pour former un bord commun circulaire 25 sur lequel s'appuie le joint d'étanchéité 37. Entre les éléments de paroi 23, la chaudière 6 comporte un organe chauffant 26, par exemple une résistance à coefficient de température positif en forme de pastille disposée entre deux électrodes planes conductrices 27 elles-mêmes encadrées par des plaques 28 électriquement isolantes et thermiquement conductrices. Les électrodes planes 27 sont reliées par des moyens traditionnels (non représentés) à un cordon d'alimentation 29. Les parties de paroi 23 sont maintenues appliquées contre les plaques 28 par un jonc élastique 30 disposé à la base de la chaudière 6. La chaudière 6 est rendue solidaire de l'élément de paroi 18 par des vis 31 fixées dans des bossages creux 32 prévus dans le fond de la chaudière.

L'appareil comporte également une embase moulée 33 fixée à l'élément de paroi 18 par des vis 34. Une pièce d'aspect 35 est emmanchée à force ou collée sur la face externe de l'élément de paroi 18.

Le fonctionnement de l'appareil selon l'invention est le suivant : l'ensemble du bloc comprenant le récipient 1, l'élément de paroi 13 et l'élément de paroi 16 est déverrouillé de la chaudière 6 qui est alors remplie d'eau, tandis que les ingrédients à chauffer tels que par exemple du lait, du cacao en poudre et du sucre, sont disposés dans le récipient 1. Le bloc comprenant le récipient 1 est alors remis en place et verrouillé. Lors du verrouillage, le rebord inférieur de l'élément de paroi 13 s'appuie sur le joint 37 et comprime celui-ci contre le rebord 25 de la chaudière 6 assurant ainsi une étanchéité entre la chaudière 6 et la chambre de vapeur 14.

L'appareil est branché et après quelques instants de la vapeur d'eau se forme et monte en pression dans la chambre de vapeur 14. Lorsque la pression est suffisante pour vaincre la résistance des ressorts 10, les billes 9 se déplacent pour déboucher des orifices 11 et de la vapeur est injectée dans le récipient 1 par les orifices 8 selon un mouvement symbolisé par des flèches sur les figures 1 et 2. Les ingrédients contenus dans le récipient 1 sont alors mis en rotation, brassés et chauffés par l'intermédiaire de la vapeur et forment ainsi un mélange homogène dans le récipient 1.

Lorsque la réserve d'eau dans la chaudière 6 est épuisée ou lorsque l'appareil est débranché, la pression dans la chambre 14 chute et les billes 9 viennent à nouveau obturer les orifices 11, empêchant ainsi le liquide contenu dans le récipient 1 de s'écouler dans la chaudière 6. Une dépression se crée alors dans la chambre de vapeur 14 en raison du refroidissement des gaz qu'elle contient. Cette dépression est compensée par l'ouverture du clapet anti-retour 20 qui admet de l'air extérieur dans la chambre de vapeur 14. Le bloc formé par le récipient 1 et les éléments de paroi 13 et 16 peut alors être à nouveau aisément déverrouillé en vue d'un nouveau cycle.

Pour éviter tout risque accidentel de surpression dans la chambre de vapeur 14 (par exemple si les buses d'injection 71 sont bouchées par un produit trop épais), on prévoit avantageusement une soupape de sécurité 38, représentée symboliquement sur la figure 1, montée entre la chambre de vapeur 14 et l'espace annulaire 21. Afin de jouer seulement un rôle de sécurité, le clapet de la soupape de sécurité 38 est taré à une valeur supérieure à celle des billes 9 des buses d'injection 7. Ainsi, en cas de surpression, la vapeur s'échappe de la chambre de vapeur 14 dans l'espace annulaire 21, lui-même relié avec l'extérieur ainsi qu'il a été indiqué ci-dessus.

Bien entendu, l'invention n'est pas limitée au mode de réalisation décrit ci-dessus et on peut y apporter des variantes d'exécution.

En particulier, si l'on ne souhaite pas donner un mouvement de rotation aux ingrédients contenus dans le récipient 1, on peut prévoir des buses d'injection disposées dans le fond du récipient 1.

Les buses équipées d'un clapet anti-retour peuvent être remplacées par de simples ouvertures reliées par un conduit à un distributeur de vapeur qui est ouvert lorsque la pression dans la chambre 14 est supérieure à la pression atmosphérique et fermé dans le cas contraire.

Dans le mode de réalisation décrit, les moyens de production de vapeur sont disposés en-dessous du récipient. On peut prévoir de disposer ceux-ci autour du récipient ou encore de disposer sous le récipient un simple réservoir d'eau destiné à être chauffé en le posant sur une plaque électrique ou sur un rond de gaz.

Bien que l'appareil selon l'invention ait été décrit plus particulièrement pour réaliser des boissons chocolatées, on comprendra aisément qu'il peut être utilisé pour d'autres préparations, y compris les préparations n'appartenant pas au domaine alimentaire.

REVENDICATIONS

1. Appareil ménager pour le chauffage à vapeur d'ingrédients comportant un récipient (1) ayant une paroi latérale (2) et un fond (3) pour recevoir les ingrédients à chauffer, des moyens de production de vapeur (6) séparés du récipient (1) et des moyens de communication (7) entre les moyens de production de vapeur (6) et le récipient (1), caractérisé en ce que les moyens de communication comprennent au moins une ouverture (8) équipée d'un dispositif anti-retour (9, 10) pour permettre un passage de vapeur vers le récipient et empêcher un retour de matière vers les moyens de production de vapeur (6).

2. Appareil ménager conforme à la revendication 1, caractérisé en ce que les moyens de communication comprennent au moins une buse d'injection (7) de vapeur.

3. Appareil ménager conforme à la revendication 2, caractérisé en ce qu'il comporte une chambre de vapeur (14) en communication avec les moyens de production de vapeur (6) et entourant la paroi latérale (2) du récipient (1) sur au moins une partie de sa hauteur.

4. Appareil ménager conforme à la revendication 3, caractérisé en ce qu'il comporte au moins deux buses d'injection (7) disposées dans la paroi latérale (2) du récipient (1), ces buses étant inclinées dans un même sens par rapport à un plan (P) normal à la paroi latérale (2) du récipient (1) au voisinage de chaque buse (7).

5. Appareil ménager conforme à la revendication 4, caractérisé en ce que les buses sont inclinées selon une direction formant un angle (A) voisin de 45° par rapport audit plan (P) respectif.

6. Appareil ménager conforme à la revendication 4 ou 5, caractérisé en ce que le fond (3) du récipient comporte une partie saillante (15) en regard des buses d'injection (7).

7. Appareil ménager conforme à l'une des revendications 2 à 6, caractérisé en ce que les buses (7) sont disposées au voisinage du fond (3) du récipient (1) et sont inclinées vers celui-ci.

8. Appareil ménager conforme à l'une des revendications 1 à 7, caractérisé en ce que le récipient (1) est monté de façon amovible sur les moyens de production de vapeur (6).

9. Appareil ménager conforme à la revendication 8, caractérisé en ce qu'il comporte un joint étanche (37) entre un élément de paroi (13) solidaire du récipient (1) et les moyens de production de vapeur (6) et en ce qu'un clapet anti-retour (20) est disposé dans une paroi de l'appareil pour permettre un passage de l'air de l'extérieur vers les moyens de production de vapeur et empêcher une fuite de vapeur vers l'extérieur.

FIG_1

FIG_2

FIG_3

Office européen
des brevets

# RAPPORT DE RECHERCHE EUROPEENNE

EP 85 40 2328

## DOCUMENTS CONSIDERES COMME PERTINENTS

| Catégorie | Citation du document avec indication, en cas de besoin, des parties pertinentes | Revendication concernee | CLASSEMENT DE LA DEMANDE (Int Cl 4) |
|---|---|---|---|
| X | US-A-1 408 356 (JONES) <br> * En entier * <br><br> --- | 1,7,8 | A 47 J 27/04 <br> A 47 J 27/00 |
| X | FR-A-1 316 159 (BRICKSON) <br> * En entier * <br><br> --- | 1,7,8 | |
| X | US-A-3 364 918 (ANDERSON) <br><br> * Colonne 2 * <br><br> ----- | 1,2,4, 7 | |
| | | | **DOMAINES TECHNIQUES RECHERCHES (Int Cl 4)** <br><br> A 47 J |

Le present rapport de recherche a ete etabli pour toutes les revendications

| Lieu de la recherche | Date d achevement de la recherche | Examinateur |
|---|---|---|
| LA HAYE | 25-02-1986 | SCHARTZ J. |